# FASCICULE DE BREVET EUROPEEN

(11) **EP 1 908 982 B1**
(45) Date de publication et mention de la délivrance du brevet: **10.03.2021**
(21) Numéro de dépôt: 07117777.8
(22) Date de dépôt: 02.10.2007
(51) Int. Cl.: F16D 69/02

(54) **Procédé de fabrication d'une garniture de friction**
Verfahren zur Herstellung eines Reibbelags
Method of manufacturing a friction lining

(30) Priorité: 04.10.2006 FR 0654087
(43) Date de publication de la demande: 09.04.2008
(73) Titulaire: Valeo Matériaux de Friction, 87020 Limoges (FR)
(72) Inventeur: Rommeru, Cécile R&D Valeo Matériaux de Friction, 87350 Panazol (FR); Adamczak, Loïc, 87140 Roussac (FR); Mamont, Bruno, 87400 Saint Leonard de Noblat (FR); Pagenot, Martine, 87590, Saint Just le Martel (FR)

(56) Documents cités:
- WO-A-00/63577
- WO-A-02/075175
- WO-A-03/074899
- DE-A1- 4 205 645
- FR-A1- 2 706 556
- FR-A1- 2 742 503
- GB-A- 644 447

## Description

La présente invention se rapporte au procédé de fabrication d'une garniture de friction, en particulier pour embrayages ou freins de véhicules automobiles. De telles garnitures sont usuellement composées de fibres, de liants et de charges. Elles sont en général fabriquées en forme de couronnes à section rectangulaire ou de fragments de telles couronnes.

Une garniture de frottement comprend une face de frottement destinée à entrer en contact avec une autre pièce et une face d'appui permettant de fixer la garniture à un support, notamment à un disque d'embrayage.

De manière usuelle, de telles garnitures sont fabriquées en mélangeant les composants puis en effectuant une « cuisson » qui correspond la plupart du temps soit à une étape de pressage à chaud soit à une étape d'injection. Les pièces obtenues sont ensuite usinées, en général par rectification des deux faces, pour obtenir une pièce à faces parallèles. Dans certaines conditions de fonctionnement d'un véhicule, on constate que de telles garnitures peuvent conduire à des comportements non souhaités, tel notamment un broutement (phénomène de saccades ou d'à-coups), par exemple à froid. Un tel broutement peut se constater par exemple lors des premiers kilomètres quand le véhicule est démarré après avoir passé une nuit au froid.

Afin de remédier à cet inconvénient, une garniture de friction et son procédé de réalisation ont été divulgués dans la demande FR 2 742 503. Selon le procédé décrit, une garniture de friction, en particulier pour embrayages à friction ou pour freins, se compose de fibres, de liants et de charges et est obtenue par mélange de ces matières puis par la séquence suivante d'étapes de traitement :
- une étape de formage, également appelée « étape de cuisson », telle que par exemple un pressage à chaud ou un moulage à injection,
- une étape de réticulation (également appelée « post-cuisson », « post-réticulation » ou bien « post-polymérisation »), par exemple un processus de durcissement,
- une étape de traitement de surface telle qu'un processus de meulage au moins de la surface de friction de la garniture,
- une étape de réticulation (soit une deuxième étape de « post-réticulation ») telle qu'un processus de durcissement.

On constate qu'un tel procédé, bien qu'avantageux en terme de propriété des garnitures obtenues et notamment au regard du broutement à froid, rajoute au moins une étape de post-réticulation par rapport à un procédé usuel de fabrication de garniture. Il en résulte un allongement des temps de cycle et un surcoût significatif.

Cet allongement est important car l'étape de post-réticulation est en général la plus longue du procédé et atteint usuellement plusieurs heures.

Les documents DE 42 05 645 et FR 2 706 556 divulguent également un procédé de fabrication de garniture de friction. Cependant, les températures utilisées lors des différentes étapes ne permettent pas d'obtenir un procédé simplifié et d'obtenir une carbonisation suffisante de la garniture de friction.

Le but de la présente invention est de remédier aux inconvénients ci-dessus et de proposer un procédé moins complexe et plus économique.

Ce but est atteint par un procédé de fabrication d'une garniture de friction comprenant une face de frottement et une face d'appui, en particulier pour embrayages ou pour freins, caractérisé en ce qu'il comprend les étapes successives suivantes :
a) mélange de fibres, de liants et de charges,
b) formage du mélange à une température T_{F} comprise entre 180 et 220° C, de manière à ce que les liants ne soient pas totalement polymérisés, suivie sans modification significative de la structure du liant par :
c) enlèvement de matière sur au moins la face de frottement, cette étape c) comportant au moins une rectification.
d) traitement thermique de post-réticulation des liants à une température T_{T} supérieure à la température T_{F} de l'étape b), la différence de température entre la température T_{T} et T_{F} étant d'au moins 30°C
et en ce qu'il ne comporte pas d'étape ultérieure de mise aux côtes après l'étape d) de post-réticulation.

Grâce à ce procédé, on obtient des garnitures où les problèmes de broutement à froid sont très significativement diminués avec des temps de cycles inférieurs à ceux du procédé divulgué de FR 2 742 503.

En effet, les inventeurs ont constaté de manière surprenante qu'en déplaçant l'étape de traitement de surface avant l'étape de post-réticulation, on pouvait s'affranchir d'une des deux étapes de réticulation divulguée par FR 2 742 503.

Selon l'invention, l'étape de formage b) est directement suivie, sans modification significative de la structure des liants, par une étape d'enlèvement de matière c), à la différence du procédé divulgué par FR 2 742 503 où l'étape d'enlèvement de matière suit une étape de réticulation qui modifie profondément la structure du liant après l'étape de formage.

Selon un mode de réalisation de l'invention, l'étape d'enlèvement de matière c) suit sans étape intermédiaire l'étape b). Selon un autre mode de réalisation, le produit intermédiaire issu de l'étape b) est stocké transitoirement avant la mise en œuvre de l'étape c).

Dans le cadre de l'invention, on entend par « un formage à une température T_{F} choisie de manière à ce que les liants ne soient pas totalement polymérisés », une étape de formage après laquelle une partie significative des liants a réticulé, mais où un traitement ultérieur peut conduire encore à un réarrangement de la structure des liants notamment par post-réticulation, diffusion ou tout autre mécanisme. Un tel réarrangement est notamment identifiable par observation au microscope électronique à balayage (MEB), par mesure par chromatographie phase gaz (CPG)ou calorimétrie différentielle à balayage (DSC) de la surface et du cœur de la garniture ou toute autre technique connue de l'homme du métier. L'homme du métier est ainsi en mesure d'identifier de manière simple les conditions d'un cycle de formage après lequel les liants ne sont pas totalement polymérisés. Le paramètre principal d'un tel cycle est la température T_{F}, mais des paramètres comme le temps du cycle de formage, la pression appliquée, d'éventuels dégazages au cours de l'étape de formage peuvent jouer également un rôle. Le traitement de post-réticulation de l'étape d) conduit à un réarrangement significatif de la structure du liant, observable par les techniques mentionnées ci-dessus.

Les inventeurs ont pu constater que la structure du matériau est sensiblement identique quand on produit une garniture avec l'un ou l'autre de ces procédés ;

On constate dans les deux cas la formation d'une couche en surface granuleuse qui prend l'aspect d'une croûte. Les grains formés ont typiquement une taille de 5 à 20 µm et peuvent coalescer entre eux. La croûte peut ne pas recouvrir la totalité de la surface de la garniture. Une telle structure s'observe aisément au Microscope Electronique à Balayage (MEB). En général une telle couche atteint entre 50 et 100 µm d'épaisseur.

Les inventeurs ont été particulièrement surpris de constater que les garnitures obtenues avec le procédé selon l'invention conservaient leur planéité après le cycle de post-réticulation, alors qu'il était communément admis qu'un cycle de post-réticulation, suivi d'un traitement de surface puis d'un second cycle de post-réticulation, étaient nécessaires pour obtenir une garniture de bonne qualité, notamment plane, et présentant un comportement au broutement à froid favorable.

Selon des modes de réalisation de l'invention:
- l'étape a) comprend l'imprégnation de fils de fibres continues dans un ciment comprenant les liants mis en solution et les charges, suivie de la réalisation d'une préforme, et où l'étape b) comprend un pressage à chaud. Un tel fil comprend en général des fibres de verre texturées. Il peut également comprendre des fils métalliques, notamment des fils de cuivre et/ou de laiton, ainsi que des fibres organiques, par exemple des fibres de polyacrylonitrile ou dérivés et/ou d'aramide. L'imprégnation se fait en général par trempage du fil dans le ciment, de manière connue en soi. En général, le fil préimprégné est disposé sous forme de lobes sur un support avant l'étape de pressage à chaud, par exemple selon l'enseignement du document WO 2005/040633 ;
- le liant est mis en solution avec un solvant aqueux. Un tel procédé ressort par exemple de l'enseignement de la demande WO 00/063577 ;
- le liant est mis en solution avec un solvant organique, notamment le trichloréthylène ;
- l'étape b) et optionnellement l'étape a) est (sont) réalisée(s) au cours d'un processus d'injection où les fibres sont des fibres discontinues. Un tel procédé ressort par exemple de l'enseignement de la demande WO 02/075175 ou de la demande WO 03/074899 ;
- les liants comprennent une ou un mélange de résine(s) choisie(s) parmi la liste époxy, polyester, mélamine, polysiloxane, phénolique, polyamide-imide, polyimide, polybenzimidazole, silicone ;
- on enlève de la matière également sur la face d'appui au cours de l'étape c) ;
- pendant l'étape c) on enlève entre 0,3 et 1 mm d'épaisseur de matière sur l'ensemble de la face traitée ;
- le traitement de post-réticulation est un traitement thermique à une température T_{T} supérieure à la température T_{F} de l'étape b) ;
- la différence de température entre la température T_{T} et T_{F} est de l'ordre de 50°C ;
- la température T_{T} est comprise entre 200 et 300°C, de préférence entre 220 et 280°C.

Une opération de rectification de la face d'appui peut être faite en fin de cycle, après l'étape d), par exemple si les tolérances sur le parallélisme des deux faces sont très sévères.

Afin d'illustrer l'invention de manière non limitative, les exemples suivants sont décrits :
Des garnitures d'embrayage de 200 mm de diamètre externe, 137 mm de diamètre interne et 3,2 mm d'épaisseur ont été réalisées à partir des constituants de la référence commerciale F810 de VALEO MATERIAUX DE FRICTION où l'étape de mélange de fibres de liants et de charges s'effectue selon l'enseignement de la demande de brevet WO 00/63577.

Après imprégnation par le ciment aqueux, les fils sont lobés sur un support et disposés dans un moule pour constituer une préforme.

L'étape de formage du mélange est effectuée par pressage à chaud de la préforme pendant 4 minutes à 200°C. Au cours de cette étape, on applique des cycles de haute et de basse pressions alternant avec des dégazages.

La garniture EX1 est ensuite surfacée pour obtenir des faces parallèles et ses propriétés sont mesurées.

La garniture, EX2, a subi un traitement du type décrit dans FR 2 742 503, comprenant deux cycles de post-réticulation de plusieurs heures entre 240 et 260°C, séparés par une opération de surfaçage par rectification où 0,3 mm d'épaisseur a été enlevé sur chacune des faces.

La garniture, EX3, a subi un traitement suivant l'invention, où un surfaçage par rectification identique à celui de l'EX2 a été effectué après l'étape de formage et suivi d'un cycle de post-réticulation de plusieurs heures entre 240 et 260°C.

Dans ces exemples, le cycle de post-réticulation est effectué par passage dans un four tunnel où les garnitures circulent par piles.

Une dizaine d'essais a été fait pour chaque type de garniture.

On constate que toutes les garnitures ainsi obtenues présentent des faces planes et parallèles.

Des essais de broutement ont été réalisés pour chaque type de garniture suivant une procédure d'essai nommée « Global Judder test » au cours de laquelle on mesure le coefficient d'amortissement au cours d'un essai vibratoire pour différentes plages de température, notamment entre 40 et 60°C, entre 80 et 140°C, entre 150 et 250°C.

Les résultats d'essais sont reportés dans le tableau suivant, où figurent la valeur moyenne (sur 7 essais) et la valeur maximale du coefficient d'amortissement pour trois plages de température et pour les trois exemples de garniture.

| Plage de température | Valeur | EX1 | EX2 | EX3 |
|---|---|---|---|---|
| 40 - 60°C | moyenne | - 0,01 | - 0,07 | - 0,05 |
| | maximale | 0,17 | 0,10 | 0,01 |
| 80 - 140°C | moyenne | - 0,04 | - 0,08 | - 0,09 |
| | maximale | 0,13 | 0,13 | 0,06 |
| 150 - 250°C | moyenne | 0,12 | 0,11 | 0,20 |
| | maximale | 0,36 | 0,25 | 0,36 |

Des essais de validation du « Global Judder Test » ont permis de démontrer que plus le coefficient d'amortissement est bas dans la plage 40 à 60°C, meilleur est le comportement au démarrage à froid, et plus on évite les comportements de broutement à froid.

On constate ainsi une très importante amélioration d'une garniture de type EX2 comparée à une garniture de type EX1. Une garniture selon l'invention, du type EX3, a encore un comportement amélioré par rapport à une garniture du type EX2.

Des essais sur véhicule ont permis de confirmer que les garnitures obtenues avec le procédé selon l'invention ont un comportement particulièrement avantageux au regard des risques de broutement à froid.

L'invention ne se limite pas à ces types de réalisation.

## Revendications

1. Procédé de fabrication d'une garniture de friction comprenant une face de frottement et une face d'appui, en particulier pour embrayages ou pour freins, comprenant les étapes successives suivantes :
a) mélange de fibres, de liants et de charges,
b) formage du mélange à une température T_{F} comprise entre 180 et 220° C, de manière à ce que les liants ne soient pas totalement polymérisés, suivie sans modification significative de la structure du liant par :
c) enlèvement de matière sur au moins la face de frottement, cette étape c) comportant au moins une rectification.
d) traitement thermique de post-réticulation des liants à une température T_{T} supérieure à la température T_{F} de l'étape b), la différence de température entre la température T_{T} et T_{F} étant d'au moins 30°C
et en ce qu'il ne comporte pas d'étape ultérieure de mise aux côtes après l'étape d) de post-réticulation.

2. Procédé selon la revendication précédente **caractérisé en ce que** l'étape a) comprend l'imprégnation de fils de fibres continues dans un ciment comprenant les liants mis en solution et les charges, suivie de la réalisation d'une préforme, et que l'étape b) comprend un pressage à chaud.

3. Procédé selon la revendication 2 **caractérisée en ce que** le liant est mis en solution avec un solvant aqueux.

4. Procédé selon la revendication 2 **caractérisé en ce que** le liant est mis en solution avec un solvant organique, notamment le trichloréthylène.

5. Procédé selon la revendication 1 **caractérisé en ce que** l'étape b) et optionnellement l'étape a) est (sont) réalisée(s) au cours d'un processus d'injection où les fibres sont des fibres discontinues.

6. Procédé selon la revendication 5 **caractérisé en ce que** les liants comprennent une ou un mélange de résine(s) choisie(s) parmi la liste époxy, polyester, mélamine, polysiloxane, phénolique, polyamide-imide, polyimide, polybenzimidazole, silicone.

7. Procédé selon l'une quelconque des revendications précédentes **caractérisé en ce qu'**on enlève de la matière également sur la face d'appui, au cours de l'étape c).

8. Procédé selon l'une quelconque des revendications précédentes **caractérisé en ce que** pendant l'étape c) on enlève entre 0,3 et 1 mm d'épaisseur de matière sur l'ensemble de la face traitée.

9. Procédé selon la revendication 1 **caractérisé en ce que** la différence de température entre la température T_{T} et T_{F} est de l'ordre de 50°C.

10. Procédé selon la revendication précédente ou la revendication 1 **caractérisé en ce que** la température T_{T} est comprise entre 200 et 300°C, de préférence entre 220 et 280°C.

## Patentansprüche

1. Verfahren zur Herstellung eines Reibbelags, der eine Reibfläche und eine Auflagefläche umfasst, insbesondere für Kupplungen oder für Bremsen, das folgende aufeinanderfolgende Schritte umfasst:
a) Mischen von Fasern, Bindemitteln und Füllstoffen,
b) Formgebung der Mischung bei einer Temperatur T_{F} zwischen 180 und 220° C derart, dass die Bindemittel nicht vollständig polymerisiert werden, anschließend, ohne wesentliche Modifikation der Struktur des Bindemittels:
c) Abtragen von Material zumindest auf der Reibfläche, wobei dieser Schritt c) mindestens einen Schleifvorgang umfasst,
d) Wärmebehandlung zur Nachvernetzung der Bindemittel bei einer Temperatur T_{T} über der Temperatur T_{F} von Schritt b), wobei der Temperaturunterschied zwischen Temperatur T_{T} und T_{F} mindestens 30°C beträgt, und dadurch, dass es keinen späteren Schritt zur Einhaltung der Maßhaltigkeit nach dem Schritt d) zur Nachvernetzung umfasst.

2. Verfahren nach dem vorhergehenden Anspruch, **dadurch gekennzeichnet, dass** Schritt a) das Tränken von Endlosfasergarnen in einem Zement, der die in Lösung gebrachten Bindemittel und die Füllstoffe umfasst, gefolgt von der Herstellung eines Vorformlings umfasst, und dass Schritt b) Heißpressen umfasst.

3. Verfahren nach Anspruch 2, **dadurch gekennzeichnet, dass** das Bindemittel mit einem wässrigen Lösungsmittel in Lösung gebracht wird.

4. Verfahren nach Anspruch 2, **dadurch gekennzeichnet, dass** das Bindemittel mit einem organischen Lösungsmittel, insbesondere Trichlorethylen, in Lösung gebracht wird.

5. Verfahren nach Anspruch 1, **dadurch gekennzeichnet, dass** Schritt b) und optional Schritt a) während eines Einspritzvorgangs durchgeführt wird bzw. werden, bei dem die Fasern Spinnfasern sind.

6. Verfahren nach Anspruch 5, **dadurch gekennzeichnet, dass** die Bindemittel ein Harz oder eine Harzmischung umfassen, das ausgewählt ist bzw. die ausgewählt sind aus der Auflistung Epoxid-, Polyester-, Melamin-, Polysiloxan-, Phenol-, Polyamidimid-, Polyimid-, Polybenzimidazol-, Silikonharz.

7. Verfahren nach einem der vorhergehenden Ansprüche, **dadurch gekennzeichnet, dass** während Schritt c) Material auch auf der Auflagefläche abgetragen wird.

8. Verfahren nach einem der vorhergehenden Ansprüche, **dadurch gekennzeichnet, dass** während Schritt c) zwischen 0,3 und 1 mm an Materialstärke von der gesamten behandelten Fläche abgetragen wird.

9. Verfahren nach Anspruch 1, **dadurch gekennzeichnet, dass** der Temperaturunterschied zwischen der Temperatur T_{T} und T_{F} in der Größenordnung von 50°C liegt.

10. Verfahren nach dem vorhergehenden Anspruch oder Anspruch 1, **dadurch gekennzeichnet, dass** die Temperatur T_{T} zwischen 200 und 300°C, vorzugsweise zwischen 220 und 280°C liegt.

## Claims

1. Method of manufacturing a friction lining comprising a friction face and a abutment face, in particular for clutches or brakes, comprising the following successive steps:
a) mixing fibres, binders and fillers,
b) forming the mixture at a temperature T_{F} of between 180° and 220°C, so that the binders are not completely polymerised, followed, without any significant modification of the structure of the binder, by:
c) removal of material on at least the friction face, this step c) comprising at least one planing,
d) post cross-linking treatment of the binders at a temperature T_{T} higher than the temperature T_{F} of step b), the difference in temperature between the temperature T_{T} and T_{F} is at least 30°C,
said method does not include any subsequent step of dimensioning after step d) of post cross-linking.

2. Method according to the preceding claim, **characterised in that** step a) comprises the impregnation of continuous fibres of threads in a cement comprising the binders put in solution and the fillers, followed by the production of a preform, and **in that** step b) comprises a hot pressing.

3. Method according to claim 2, **characterised in that** the binder is put in solution with an aqueous solvent.

4. Method according to claim 2, **characterised in that** the binder is put in solution with an organic solvent, in particular trichlorethylene.

5. Method according to claim 1, **characterised in that** step b) and optionally step a) is or are performed during an injection process where the fibres are discontinuous fibres.

6. Method according to claim 5, **characterised in that** the binders comprise a resin or a mixture of resins chosen from the list epoxy, polyester, melamine, polysiloxane, phenolic, polyamide-imide, polyimide, polybenzimidazole and silicone.

7. Method according to any one of the preceding claims, **characterised in that** material is also removed on the abutment face, during step C.

8. Method according to any one of the preceding claims, **characterised in that**, during step c), between 0.3 and 1 mm thickness of material is removed over the whole of the treated face.

9. Method according to the preceding claim, **characterised in that** the difference in temperature between the temperature T_{T} and T_{F} is around 50°C.

10. Method according to the preceding claim or claim 9, **characterised in that** the temperature T_{T} is between 200° and 300°C, preferably between 220° and 280°C.
